(19) Europäisches Patentamt

European Patent Office

Office européen des brevets

(11) **EP 1 580 982 A2**

(12) **EUROPEAN PATENT APPLICATION**

(43) Date of publication:
28.09.2005 Bulletin 2005/39

(51) Int Cl.⁷: **H04N 1/60**, H04N 9/04

(21) Application number: 05251044.3

(22) Date of filing: 23.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **24.02.2004 US 786900**

(71) Applicant: **OmniVision Technologies, Inc.
California 94089 (US)**

(72) Inventor: **Wei-Feng, Huang
Saratoga, California 95070 (US)**

(74) Representative: **Hackney, Nigel John et al
Mewburn Ellis LLP
York House,
23 Kingsway
London WC2B 6HP (GB)**

(54) **Image data processing in color spaces**

(57) Image data in a first color space is converted to image data corresponding to a second color space. Image processing of the image data occurs in the second color space. After image processing is complete, the image data is then converted to image data in any one of the following color spaces:

1) the first color space,
2) a third color space, or
3) the second color space but using a conversion method that is different than the conversion method used to convert the image data from the first color space to the second color space.

FIG. 5

EP 1 580 982 A2

## Description

The present invention is directed to image processing, and more specifically to image processing in color spaces.

Current methods of processing image data to produce high quality images are expensive. For example, when all the image processing occurs in the YUV color space, a high-processing costs and high data storage costs are incurred. Image processing that occurs in the $YC_bC_r$ color space results in similar high costs. On the other hand, when all the image processing occurs in the RGB raw color space, storage and processing costs are relatively cheap. However, the quality of images produced by working in the RGB raw color space is poor.

In view of the foregoing, an efficient method for producing good quality images, is needed.

Various aspects of the invention are set out in the claims.

BRIEF DESCRIPTION OF THE DRAWINGS

FIG. 1A is a high-level flow chart that shows some acts performed by the facility for processing image data.

FIG. 1 B is a block diagram that illustrates the data flow for processing image data.

FIG. 2 is a block diagram showing some of the components typically incorporated in at least some of the computer systems and other devices on which the facility executes.

FIG. 2A is a block diagram showing an imaging capture system incorporated with computer systems.

FIG. 3 is a high-level flow chart that describes a method for converting image data from a first color space to a second color space.

FIG. 4 is representation of the Bayer pattern.

FIG. 5 is a block diagram that illustrates the manner in which the missing color components of a pixel can be derived.

FIG. 6 is a representation of image data that has been converted from an RGB raw color space to the RGB composite color space.

FIG. 7 is a high-level flow chart that describes a method for converting image data from the second color space to the final color space.

FIG. 8 is a representation of image data that has been converted from the RGB composite color space to the RGB raw color space.

DETAILED DESCRIPTION

A computerized facility (hereafter "the facility") for automatically processing image data, is described. The facility may either be software-implemented, or hardware-implemented or the facility may be a combination of software and hardware implementations. Components of the facility may reside on and/or execute on any combination of computer systems. Such computer systems may be connected via a network, which may use a variety of different networking technologies, including wired, guided or line-of-sight optical, and radio frequency networking. In some embodiments, the network includes the public-switched telephone network. Network connections established via the network may be fully-persistent, session-based, or intermittent, such as packet-based. Original image data, any intermediate data resulting from processing the original image data, and the final processed image data may similarly reside on any combination of these computer systems. Those skilled in the art will appreciate that the facility may also operate in a wide variety of other environments.

According to certain embodiments, the facility can be an imaging capture system, such as video camera, surveillance camera, digital still camera, digital camcorder or PC camera, which can be operated individually or be connected to computer systems, such as cellular phone, smart phone, network devices, PDA or PC. The imaging capture system and computer systems can form a larger system, such as camera cellular phone, camera smart phone, video phone, network camera, camera PDA, and video conferencing system. The facility may either be software-implemented, or hardware-implemented or the facility may be a combination of software and hardware implementations. Such imaging capture systems may be connected to computer systems via wired or wireless, serial or parallel buses with high or low speed transfer rates, such as USB 1.1, USB 2.0, IEEE1394, LVDS, UART, SPI, $I^2C$, μWire, EPP/ECP, CCIR601, CCIR656, IrDA, Bluetooth or proprietary buses.

According to certain embodiments, the facility processes image data by first converting the image data that is associated with one color space into image data that corresponds to a different color space before performing any image processing on the image data. After the image processing is complete, the processed image data is then converted either to its original color space or some other colored space. Examples of color spaces are RGB (red-green-blue) raw color space, RGB composite color space, $YC_bC_r$ (luminance-chrominance_blue-chrominance_red) color space, YUV (luminance-color) color space, YIQ (luminance-in-phase-quadrature) color space, $YD_bD_r$ (luminance-lumina_difference_blue-lumina_difference_red) color space, YCC (display device independent) color space, HSI (hue-saturation-intensity) color space, HLS (hue-lightness-saturation) color space, HSV (hue-saturation-value) color space, CMY (cyan-magenta-yellow) color space and CMYK (cyan-magenta-yellow-black) color space.

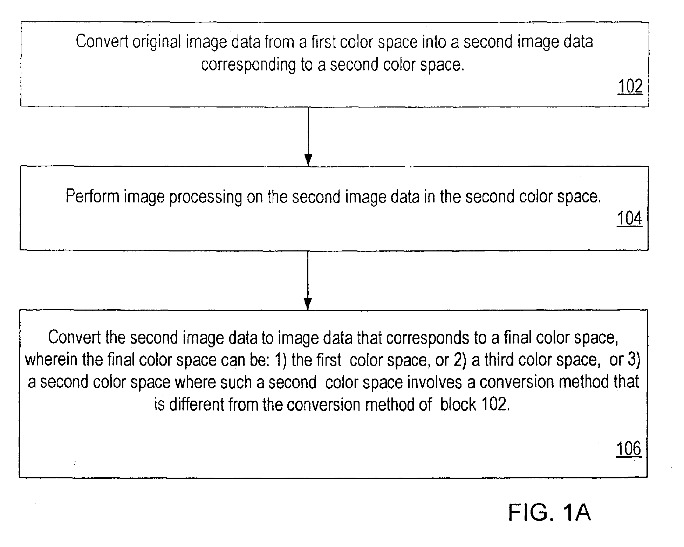

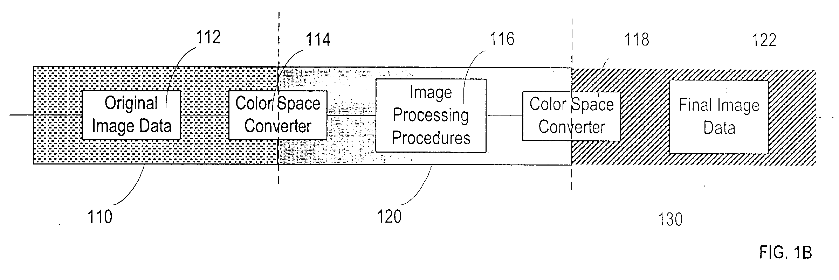

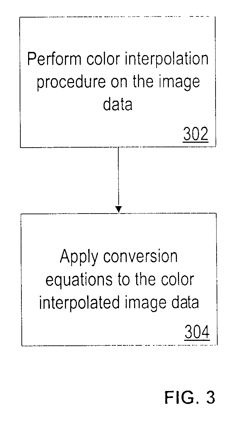

FIG. 1A is a high-level flow chart that shows some acts performed by the facility for processing image data. According to certain embodiments, at block 102, the facility converts original image data from a first color space into a second image data that corresponds to a second color space. Such a conversion is described in greater detail herein with reference to FIG. 3 through FIG. 6. At block 104, the facility performs one or more image processing procedures on the second image data in the second color space. Image processing procedures are described in greater detail herein with reference to FIG. 1 B. At block 106, after image processing is performed on the second image data, the second image data is converted to image data that corresponds to a final color space.

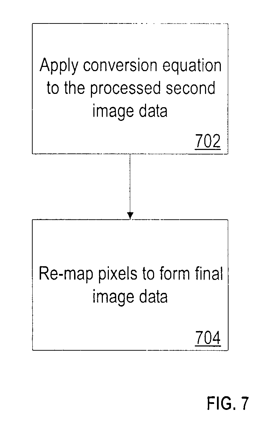

The final color space can be any one of the following types of color space: 1) the first color space, or 2) a third color space, or 3) a second color space, wherein conversion to such a second color space involves a conversion method that is different from the conversion method of block 102. The conversion to the final color space is described in greater detail herein with reference to FIG. 7.

FIG. 1 B is a block diagram that illustrates the data flow for processing image data. FIG. 1 B shows a first color space 110, a second color space 120 and a final color space 130. The first, second and final color spaces can be any color space, depending on the application that will use the final processed image data. Original image data 112 is in the first color space 110. Color space converter 114 is used for converting original image data 112 to image data (not shown) that corresponds to the second color space 120. Image processing procedures 116 are applied to the image data in color space 120. Color space converter 118 is used for converting image data in color space 120 to the final image data 122 that corresponds to the final color space 130.

Color space converters 114 and 118 may be either software-implemented or hardware-implemented according to certain embodiments. According to other embodiments, color space converters 114 and 118 may be a combination of software and hardware-implementations.

Some examples of image processing procedures 116 involve performing auto white balancing, performing auto exposure control, performing gamma correction, performing edge detection, performing edge enhancement, performing color correction, performing cross-talk compensation, performing hue control, performing saturation control, performing brightness control, performing contrast control, performing de-noising filtering, performing smoothing filtration, performing decimation filtration, performing interpolation filtration, performing image data compression, performing white pixel correction, performing dead pixel correction, performing wounded pixel correction, performing lens correction, performing frequency detection, performing indoor detection, performing outdoor detection, and applying special effects.

Temporary buffers may be used to store the image data that has been converted to image data that corresponds to the second color space. Temporary buffers may also be used to store image data resulting from the application image processing procedures 116 as described above. Such temporary buffers may range in size from several pixels to several pixel lines or several frames.

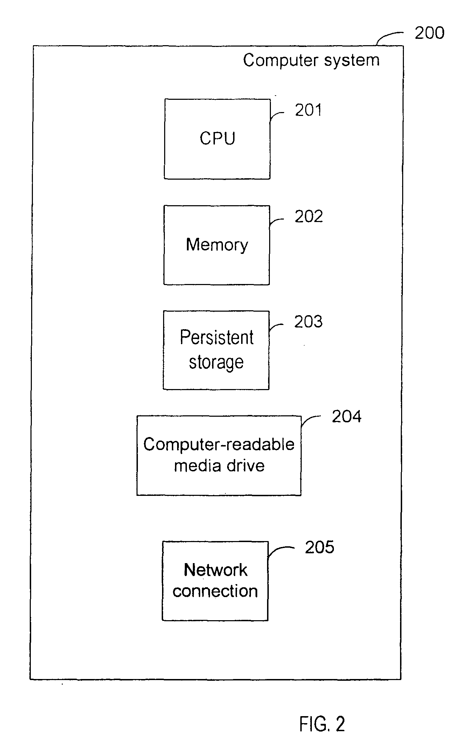

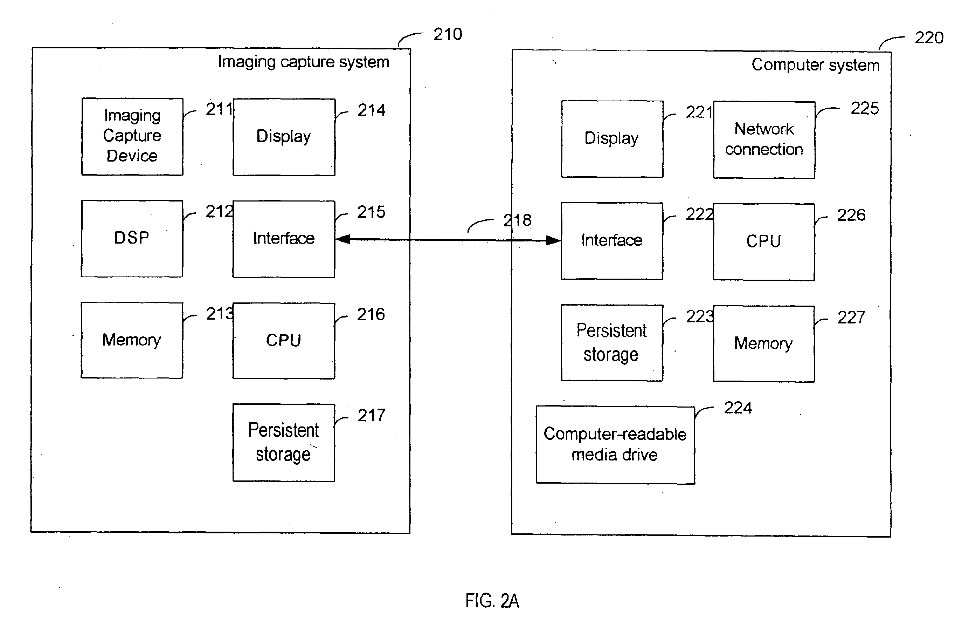

FIG. 2 is a block diagram showing some of the components typically incorporated in at least some of the computer systems and other devices on which the facility executes. These computer systems and devices 200 may include one or more central processing units ("CPUs") 201 for executing computer programs; a computer memory 202 for storing programs and data while they are being used; a persistent storage device 203, such as a hard drive, for persistently storing programs and data; a computer-readable media drive 204, such as a CD-ROM drive, for reading programs and data stored on a computer-readable medium; and a network connection 205 for connecting the computer system to other computer systems, such as via the Internet, to exchange programs and/or data. While computer systems configured as described above are typically used to support the operation of the facility, those skilled in the art will appreciate that the facility may be implemented using devices of various types and configurations, and having various components.

FIG. 2A is a block diagram showing an imaging capture system incorporated with computer systems, such as computer systems 200 of FIG. 2. An imaging capture device 211, such as CMOS or CCD image sensor, captures image data via an optical lens, and converts the image data to an electrical signal. The imaging capture device can process captured electrical signal and digitize the electrical signal. A DSP (digital signal processor) 212, which can be hardwired or programmable, processes digitized signals and converts the digitized signal to a desired format, such as RGB, YUV, $YC_bC_r$, JPEG or MPEG, for storing or transferring. The conversion methods described herein may be applied in the DSP. A CPU 216 can take control of the imaging capture system, while memory 213, such as SRAM, DRAM or ROM, can be accessed by DSP, CPU, internal buses or external buses for storing image data, temporary data or program data. A persistent storage 217, such as flash memory, SD card, MMC card, CF card, memory stick card or hard disk can store image data, temporary data or program data. A display device 214, such as LCD display or TV signal converter, can display captured image, stored image or some text/graphic overlay. An interface 215, such as USB 1.1, USB 2.0, IEEE1394, LVDS, UART, SPI, $I^2C$, μWire, EPP/ECP, CCIR601, CCIR656, IrDA, Bluetooth or proprietary buses, can connect to the computer system 220 for transferring image date, stored data or commands.

The computer system 220 may be a large computer system, a personal computer system, an embedded computer system, or some proprietary computer system. It may include a CPU 226, memory 227, persistent storage 223, computer readable media drive 224, a network connection 225, interface 222, persistent storage 223, computer-readable media drive 224, and a display 221.

FIG. 3 is a high-level flow chart that describes a method for converting image data from a first color space to a second color space in the context of the method described with reference to FIG. 1A. At block 302, the facility performs a color interpolation procedure on the image data that is targeted for conversion. A color interpolation procedure is a way of generating missing or needed information. A color interpolation procedure can be applied to a conversion from a single color component color space to a multiple color component color space. For example, image data that corresponds to a RGB raw color space can be interpolated to an RGB composite image. After the color interpolation procedure is complete, at block 304, the facility applies conversion equations to the color interpolated image data to form a converted image data that corresponds to the second color space. FIG. 3 is described with reference to conversion of image data from the first color space to the second color space in the context of the method of FIG. 1A. However, the conversion method as described with reference to FIG. 3 can apply to the conversion of image data from the second color space to the final color space.

For purposes of explanation, assume that the original image data is RGB raw data with a pattern such as the Bayer pattern. Assume that the objective is to first convert the Bayer pattern image data into interpolated RGB composite image data, and further into image data that corresponds to a second color space such as $YC_bC_r$ color space. Assume that image processing takes place on the $YC_bC_r$ data. Next, for ease of explanation, assume that the processed $YC_bC_r$ data is converted to the final image data that corresponds to the RGB raw color space, i.e., the first color space. However, as explained earlier, the image data in the second color space is not restricted to conversion back to the first color space.

Depending on the color space to be converted, the conversion method can be described by either block 302 or block 304. For example, assume that the original image data is RGB raw data. Assume that the objective is to convert the RGB raw data into image data that corresponds to a second color space such as RGB composite color space. In this case, only block 302 is performed. In another example, assume that the original image data is RGB composite data. Assume that the objective is to convert the RGB composite data into image data that corresponds to a second color space such as $YC_bC_r$ color space. In such a case, only block 304 is performed.

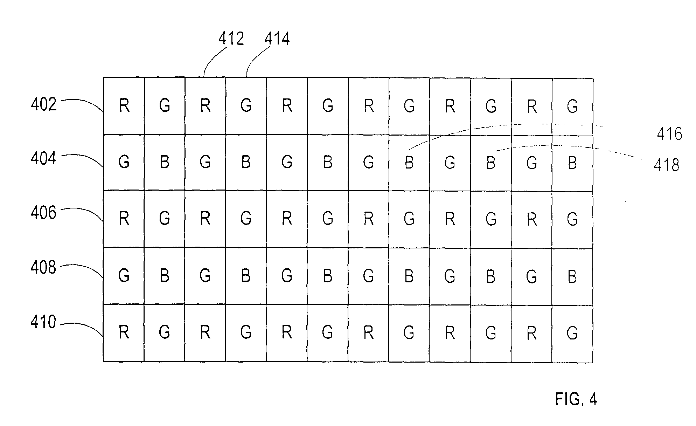

FIG. 4 is representation of the Bayer pattern. In Fig. 4 are illustrated 5 pixel lines 402, 404, 406, 408 and 410. The pixel lines 402, 406 and 410 contain Red and Green pixels only, such as Red pixel 412 and Green pixel 414. The pixel lines 404 and 408 contain Green and Blue pixels only, such as Green pixel 416 and Blue pixel 418. In our example, the Bayer pattern data is converted to image data in the second color space, namely, the $YC_bC_r$ color space. Thus, a color interpretation procedure, such as that of block 302 of FIG. 3, is applied to the Bayer pattern data and then a conversion equation is applied to the resulting color interpolated image data.

The color interpolation procedure of block 302 can involve one or more of the following operations:

Operation 1:

Missing color components of a pixel can be derived horizontally from its closest previous and next pixels containing its missing color components. According to certain embodiments, the missing color components can be calculated as an average of the pixel's closest previous and next pixels or by using a weighting function based on the pixel's closest previous and next pixels. Referring to the Bayer pattern example of FIG. 4, missing color components of an R pixel, such as pixel 412, are B and G. According to the Bayer Pattern, the R pixel's closest previous and next pixels are G pixels. Thus, the missing G component of the R pixel can be derived from the average number of its closest previous and next pixels. By using the same method, missing R or B component of a G pixel, or the missing G component of a B pixel can be interpolated.

Operation 2:

For a given pixel that has no previous pixel on a pixel line, the missing color components of such a pixel can be derived horizontally from its closest next pixel containing its missing color components, according to certain embodiments. For example, in FIG. 4, the first R pixel of pixel line 402 has no closest previous pixel, and can only derive its missing G component from its closest next pixel. By using the same method, the first R pixel of pixel lines 406 and 410, and the first G pixel of pixel lines 404, and 408, can derive their respective missing color components.

Operation 3:

For a given pixel that has no next pixel on a pixel line, the missing color components of such a pixel can be derived horizontally from its closest previous pixel containing its missing color components. For example, in FIG. 4, the last G pixel of a pixel line 402 has no closest next pixel, and can only derive its missing G component from its closest previous pixel. By using the same method, the last G pixel of pixel lines 406 and 410, and the last B pixel of pixel lines 404, and 408, can derive their respective missing color components.

Operation 4:

Missing color components of a pixel in a given pixel line can be derived from its previous pixel line according to certain embodiments. The missing color components can be calculated as an average or by using a weighting function based on the pixels in the previous line of pixels, according to certain embodiments. Such a calculation is made for each pixel of the given pixel line. For example, the RG pixel line, such as pixel line 406 of FIG. 4, can derive its missing B component from the average of the B pixels of the previous pixel line 404. By using the same method, each pixel on a GB pixel, such as pixel lines 404 and 408 can derive their respective missing R component.

Operation 5:

Missing color components of a line can be replaced by a fixed number if there is no previous pixel line. For example, the first RG pixel line, such as pixel line 402 of FIG. 4 has no previous line. Thus, instead of calculating the missing B component, the missing B component is replaced by a suitable fixed number, such as 0. According to certain embodiments, the fixed number may be selected based on the target color space into which conversion is desired. According to other embodiments, the fixed number may be selected based on pixel information that is associated with previous frames of the image data.

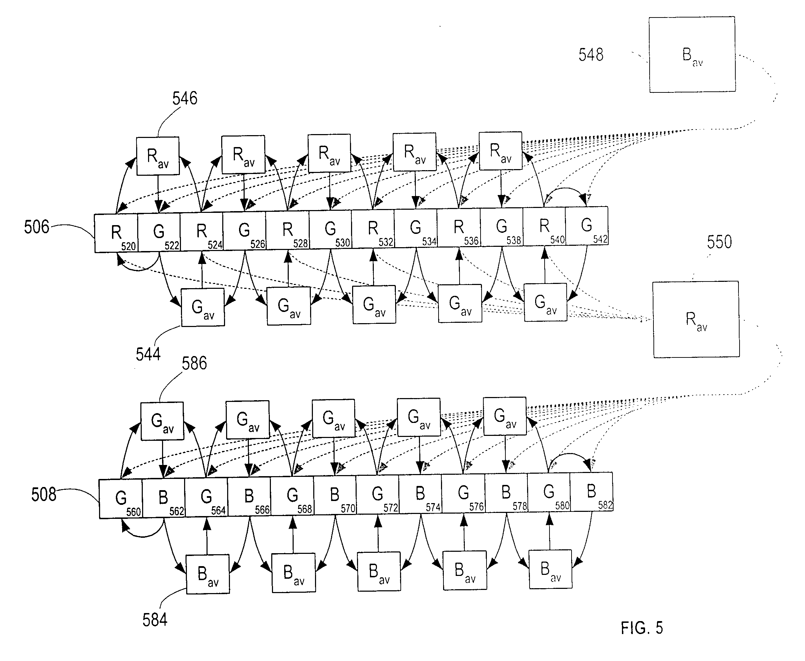

FIG. 5 is a block diagram that illustrates the manner in which the missing color components of a pixel can be derived by using operations 1 to 4 above. FIG. 5 is described in the context of converting image data from a Bayer pattern to an RGB composite color space. In FIG. 5, pixel line 506 comprises R and G pixels. The R pixels in pixel line 506 are pixels 520, 524, 528, 532, 536, and 540. The G pixels in pixel line 506 are pixels 522, 526, 530, 534, 538, and 542. The R pixels in pixel line 506 are averaged to form the $R_{av}$ value 550. In a similar fashion, the B pixels in a previous pixel line (not shown in FIG. 5) relative to pixel line 506 are averaged to form the $B_{av}$ value 548. In pixel line 506, $R_{av}$ value 546 is the calculated average based on R pixel 520 and R pixel 524. In pixel line 506, $G_{av}$ value 544 is the calculated average based on G pixel 522 and G pixel 526.

Pixel line 508 comprises G and B pixels. The G pixels in pixel line 508 are pixels 560, 564, 568, 572, 576, and 580. The B pixels in pixel line 508 are pixels 562, 566, 570, 574, 578, and 582. $G_{av}$ value 586 is the calculated average based on G pixel 560 and G pixel 564. $B_{av}$ value 584 is the calculated average based on B pixel 562 and B pixel 566.

The first pixel on pixel line 506 is pixel 520, which is an R pixel. The missing color components for R pixel 520 are G and B. The missing G component for pixel 520 can be derived using operation 2 as described above. In other words, the missing G component for pixel 520 can be derived from pixel 520's closest next pixel, namely, G pixel 522. The missing B component for pixel 520 can be derived using operation 4 as described above. In other words, the missing B component for pixel 520 can be derived from the previous pixel line (not shown in FIG. 5). As previously explained, the B pixels in the previous pixel line relative to pixel line 506 are averaged to form the $B_{av}$ value 548. This $B_{av}$ value 548 can be used as the missing B component for R pixel 520.

The second pixel on pixel line 506 is pixel 522, which is a G pixel. The missing color components for G pixel 522 are R and B. The missing R component for pixel 522 can be derived using operation 1 as described above. In other words, the missing R component for pixel 522 can be derived from pixel 522's closest previous and next pixels, namely, R pixel 520 and R pixel 524, respectively. As previously explained, R pixel 520 and R pixel 524 can be averaged to form $R_{av}$ value 546. Thus, $R_{av}$ value 546 can be used as the missing R component for G pixel 522. The missing B component for pixel 522 can be derived using operation 4 as described above. In other words, the missing B component for pixel 522 can be derived from the previous pixel line (not shown in FIG. 5). Thus, the $B_{av}$ value 548 can be used as the missing B component for pixel 522.

With reference to pixel line 506 in FIG. 5, the missing color components for the other G pixels such as pixel 526, 530, 534 and 538 are determined in a similar manner as described with reference to G pixel 522.

The third pixel on pixel line 506 is pixel 524, which is an R pixel. The missing color components for R pixel 524 are G and B. The missing G component for pixel 524 can be derived using operation 1 as described above. In other words, the missing G component for pixel 524 can be derived from pixel 524's closest previous and next pixels, namely, G pixel 522 and G pixel 526, respectively. As previously explained, G pixel 522 and G pixel 526 can be averaged to form $G_{av}$ value 544. Thus, $G_{av}$ value 544 can be used as the missing G component for R pixel 524. The missing B component for pixel 524 can be derived using operation 4 as described above. In other words, the missing B component for pixel 524 can be derived from the previous pixel line (not shown in FIG. 5). Thus, the $B_{av}$ value 548 can be used as the missing B component for pixel 524.

With reference to pixel line 506 in FIG. 5, the missing color components for the other R pixels such as pixel 528, 532, 536 and 540 are determined in a similar manner as described with reference to R pixel 524.

The last pixel on pixel line 506 is pixel 542, which is a G pixel. The missing color components for G pixel 542 are R and B. The missing R component for pixel 542 can be derived using operation 3 as described above. In other words, the missing R component for pixel 542 can be derived from pixel 542's closest previous pixel, namely, R pixel 540. The missing B component for pixel 542 can be derived using operation 4 as described above. In other words, the missing B component for pixel 542 can be derived from the previous pixel line (not shown in FIG. 5). Thus, the $B_{av}$ value 548 can be used as the missing B component for pixel 542.

The first pixel on pixel line 508 is pixel 560, which is a G pixel. The missing color components for G pixel 560 are B and R. The missing B component for pixel 560 can be derived using operation 2 as described above. In other words, the missing B component for pixel 560 can be derived from pixel 560's closest next pixel, namely, B pixel 562. The missing R component for pixel 560 can be derived using operation 4 as described above. In other words, the missing R component for pixel 560 can be derived from the previous pixel line, namely pixel line 506 in FIG. 5. As previously explained, the R pixels in pixel line 506 are averaged to form the $R_{av}$ value 550. This $R_{av}$ value 550 can be used as the missing R component for G pixel 560.

The second pixel on pixel line 508 is pixel 562, which is a B pixel. The missing color components for B pixel 562 are G and R. The missing G component for pixel 562 can be derived using operation 1 as described above. In other words, the missing G component for pixel 562 can be derived from pixel 562's closest previous and next pixels, namely, G pixel 560 and G pixel 564, respectively. As previously explained, G pixel 560 and G pixel 564 can be averaged to form $G_{av}$ value 586. Thus, $G_{av}$ value 586 can be used as the missing G component for B pixel 562. The missing R component for pixel 562 can be derived using operation 4 as described above. In other words, the missing R component for pixel 562 can be derived from the previous pixel line, namely pixel line 506 in FIG. 5. Thus, the $R_{av}$ value 550 can be used as the missing R component for pixel 562.

With reference to pixel line 508 in FIG. 5, the missing color components for the other B pixels such as pixels 566, 570, 574 and 578 are determined in a similar manner as described with reference to B pixel 562.

The third pixel on pixel line 508 is pixel 564, which is a G pixel. The missing color components for G pixel 564 are B and R. The missing B component for pixel 564 can be derived using operation 1 as described above. In other words, the missing B component for pixel 564 can be derived from pixel 564's closest previous and next pixels, namely, B pixel 562 and B pixel 566, respectively. As previously explained, B pixel 562 and B pixel 566 can be averaged to form $B_{av}$ value 584. Thus, $B_{av}$ value 584 can be used as the missing B component for G pixel 564. The missing R component for pixel 564 can be derived using operation 4 as described above. In other words, the missing R component for pixel 564 can be derived from the previous pixel line, namely pixel line 506 in FIG. 5. Thus, the $R_{av}$ value 550 can be used as the missing R component for pixel 564.

With reference to pixel line 508 in FIG. 5, the missing color components for the other G pixels such as pixels 568, 572, 576 and 580 are determined in a similar manner as described with reference to G pixel 564.

The last pixel on pixel line 508 is pixel 582, which is a B pixel. The missing color components for B pixel 582 are G and R. The missing G component for pixel 582 can be derived using operation 3 as described above. In other words, the missing G component for pixel 582 can be derived from pixel 582's closest previous pixel, namely, G pixel 580. The missing R component for pixel 582 can be derived using operation 4 as described above. In other words, the missing R component for pixel 582 can be derived from the previous pixel line, namely, pixel line 506. Thus, the $R_{av}$ value 550 can be used as the missing R component for pixel 582.

Further, after the color interpretation procedure is complete, a filtering process may be applied to the image data, according to certain embodiments. According to other embodiments, a filtering process may be applied to the image data before the color interpolation procedure is applied to the image data. According to yet another embodiment, a filtering process may be applied to the image data both before and after the color interpolation procedure. Examples of filters that can be used in such filtering processes are: finite impulse response (FIR) filters, infinite impulse response (IIR) filters, low-pass filters, high-pass filters, band-pass filters, band-stop filters, all-pass filters, anti-aliasing filters, decimation (down-sampling) filters, and interpolation (up-sampling) filters.

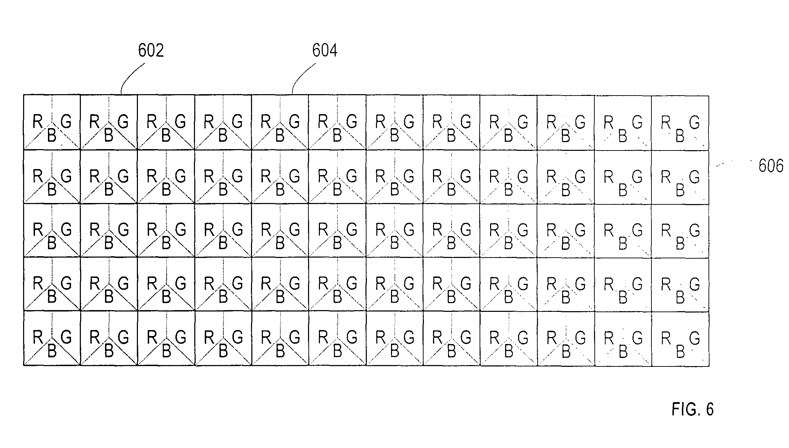

FIG. 6 is a representation of image data that has been converted from an RGB raw color space to the RGB composite color space. In FIG. 6, each pixel, such as pixels 602, 604 and 606 contain multiple color components, namely, R, G and B components.

The color interpolation procedure of block 302 can also involve other standard or proprietary interpolation methods. Some examples of color interpolation methods involve nearest neighbor interpolation, bilinear interpolation, cubic interpolation, Laplacian interpolation, adaptive Laplacian interpolation, smooth hue transition, smooth hue transition Log interpolation, edge sensing interpolation, variable number of gradients, pattern matching interpolation, linear color correction interpolation, and pixel grouping interpolation.

To complete the conversion of image data from the first color space to the second color space, the facility applies a conversion equation to the color interpolated image data to form a converted image data that corresponds to the second color space. The conversion equations that are to be applied depend on the color space that is targeted to be the second color space. The conversion equations may be standard equations or proprietary equations. The following are some sample conversion equations:

RGB to $YC_bC_r$:

$$Y = (77/256)*R + (150/256)*G + (29/256)*B$$

$$Cb = -(44/256)*R - (87/256)*G + (131/256)*B + 128$$

$$Cr = (131/256)*R - (110/256)*G - (21/256)*B + 128$$

RGB to YUV:

$$Y = 0.299*R + 0.587*G + 0.114*B$$

$$U = -0.147*R - 0.289*G + 0.436*B$$

$$V = 0.615*R - 0.515*G - 0.100*B$$

RGB to YIQ:

$$Y = 0.299*R + 0.587*G + 0.114*B$$

$$I = 0.596*R - 0.275*G - 0.321*B$$

$$Q = 0.212*R - 0.523*G + 0.311*B$$

RGB to $YD_bD_r$:

$$Y = 0.299*R + 0.587*G + 0.114*B$$

$$D_b = -0.450*R - 0.883*G + 1.333*B$$

$$D_r = -1.333*R + 1.116*G + 0.217*B$$

RGB to YCC:

For R, G, B $\geq 0.018$

$$R' = 1.099*R^{0.45} - 0.099$$

$$G' = 1.099*G^{0.45} - 0.099$$

$$B' = 1.099*B^{0.45} - 0.099$$

For R, G, B $\leq -0.018$

$$R' = -1.099*|R|^{0.45} - 0.099$$

$$G' = -1.099*|G|^{0.45} - 0.099$$

$$B' = -1.099*|B|^{0.45} - 0.099$$

For $-0.018 < R, G, B < 0.018$

$$R' = 4.5*R$$

$$G' = 4.5*G$$

$$B' = 4.5*B$$

$$Y = 0.299*R' + 0.587*G' + 0.114*B'$$

$$C1 = -0.299*R' - 0.587*G' + 0.866*B'$$

$$C2 = 0.701*R' - 0.587*G' - 0.114*B'$$

RGB to HSI:

Setup equations (RGB range of 0 to 1):

$$M = \max (R, G, B)$$

$$m = \min (R, G, B)$$

$$r = (M-R) / (M - m)$$

$$g = (M - G) / (M - m)$$

$$b = (M - B) / (M - m)$$

Intensity calculation (intensity range of 0 to 1):

$$I = (M + m) / 2$$

Saturation calculation (saturation range of 0 to 1):

If $M = m$ then $S = 0$ and $H = 180°$
If $I \leq 0.5$ then $S = (M - m) / (M + m)$
If $I > 0.5$ then $S = (M - m) / (2 - M - m)$

Hue calculation (hue range of 0 to 360°):

Red = 0°

If R = M then H = 60*(b - g)
If G = M then H = 60*(2 + r - b)
If B = M then H = 60*(4 + g - r)
If H ≥360 then H = H - 360
If H < 0 then H = H + 360

Blue = 0°

If R = M then H = 60*(2 + b - g)
If G = M then H = 60*(4 + r - b)
If B = M then H = 60*(6 + g - r)
If H ≥360 then H = H - 360
If H < 0 then H = H + 360

RGB to HSV:

Setup equations (RGB range of 0 to 1):

$$M = max (R, G, B)$$

$$m = min (R, G, B)$$

$$r = (M - R) / (M - m)$$

$$g = (M - G) / (M - m)$$

$$b = (M - B) / (M - m)$$

Value calculation (value range of 0 to 1):

$$V = max (R, G, B)$$

Saturation calculation (saturation range of 0 to 1):

If M = 0 then S = 0 and H = 180°
If M ≠0 then S = (M - m) / M

Hue calculation (hue range of 0 to 360°):

If R = M then H = 60*(b - g)
If G = M then H = 60*(2 + r - b)
If B = M then H = 60*(4 + g - r)
If H ≥360 then H = H - 360
If H < 0 then H = H + 360

RGB to CMY:

$$C = 1 - R$$

$$M = 1 - G$$

$$Y= 1 - B$$

RGB to CMYK:

$$C = 1 - R$$

$$M = 1 - G$$

$$Y= 1 - B$$

$$K = min (C, M, Y)$$

YUV to YIQ:

$$I = V* \cos (33°) - U*\sin (33°)$$

$$Q = V* \sin (33°) + U*\cos (33°)$$

Further descriptions of conversion equations can be found in Video Demystified, by Keith Jack, LLH Technology Publishing, the contents of which are incorporated by reference herein.

When the original image data is completely converted to the second image data corresponding to the second color space, image processing procedures, such as image processing procedures 116 as described in with reference to FIG. 1 B, are applied to the second image data to form processed second image data. After image processing is performed on the second image data, the second image data is converted to image data that corresponds to a final color space.

FIG. 7 is a high-level flow chart that describes a method for converting image data from the second color space to the final color space in the context of the method described with reference to FIG. 1A. Even though the method of FIG. 7 is described with reference to conversion of image data from the second color space to the final color space, such a conversion method can apply to the conversion of image data from the first color space to the second color space.

At block 702 of FIG. 7, conversion equations are applied to the processed second image data. The conversion equations that are to be applied depend on the color space that is targeted to be the final color space. The conversion equations may be standard equations or proprietary equations. The following are some sample conversion equations:

$YC_bC_r$ to RGB:

$$R = Y + 1.371*(Cr-128)$$

$$G = Y - 0.698*(Cr-128) - 0.336*(Cb-128)$$

$$B = Y + 1.732*(Cb-128)$$

YUV to RGB:

$$R = Y + 1.140*V$$

$$G = Y - 0.394*U - 0.581*V$$

$$B = Y + 2.032*U$$

YIQ to RGB:

$$R = Y + 0.956*I + 0.621*Q$$

$$G = Y - 0.272*I - 0.647*Q$$

$$B = Y - 1.105*I + 1.702*Q$$

$YD_bD_r$ to RGB:

$$R = Y - 0.526*D_r$$

$$G = Y - 0.129*D_b + 0.268*D_r$$

$$B = Y + 0.665*D_b$$

YCC to RGB:

$$L' = 1.3584*(luma)$$

$$C1 = 2.2179*(chroma1 - 156)$$

$$C2 = 1.8215*(chroma2 - 137)$$

$$R = L' + C2$$

$$G = L' - 0.194*C1 - 0.509*C2$$

$$B = L' + C1$$

HSI to RGB:

<u>Setup equations:</u>

If $I \leq 0.5$ then M = I*(1 + S)
If I > 0.5 then M = I + S - I*S
m = 2*I - M
If S = 0 then R = G = B = I and H = 180°

<u>Equations for calculating R (range of 0 to 1);</u>

Red = 0°

If H < 60 then R = M
If H < 120 then R = m + ((M - m) / ((120 - H) / 60))
If H < 240 then R = m
If H < 300 then R = m + ((M - m) / ((H - 240) / 60))
Otherwise R = M

Blue = 0°

If H < 60 then R = m + ((M - m) / (H / 60))
If H < 180 then R = M
If H < 240 then R = m + ((M - m) / ((240 - H) / 60))
Otherwise R = m

<u>Equations for calculating G (range of 0 to 1);</u>

Red = 0°

If H < 60 then G = m + ((M - m) / (H / 60))
If H < 180 then G = M
If H < 240 then G = m + ((M - m) / ((240 - H) / 60))
Otherwise R = m

Blue = 0°

If H < 120 then G = m
If H < 180 then G = m + ((M - m) / ((H - 120) / 60))
If H < 300 then G = M

Otherwise G = m + ((M - m) / ((360 - H) / 60))

Equations for calculating B (range of 0 to 1);

Red = 0°

If H < 120 then B = m
If H < 180 then B = m + ((M - m) / ((H - 120) / 60)) if H < 300 then B = M
Otherwise B = m + ((M - m) / ((360 - H) / 60))

Blue = 0°

If H < 60 then B = M
If H < 120 then B = m + ((M - m) / ((120 - H) / 60))
If H < 240 then B = m
If H < 300 then B = m + ((M - m) / ((H - 240) / 60))
Otherwise B = M

HSV to RGB:

Setup equations:

If S = 0 then H = 180°, R = V, G = V, and B = V
Otherwise
If H = 360 then H = 0

h = H / 60

i = largest integer of h

f = h - i

p = V * (1 - S)

q = V * (1 - (S*f))

t = V * (1 - (S*(1 - f)))

RGB calculations (RGB range of 0 to 1):

If i = 0 then (R, G, B) = (V, t, p)
If i = 1 then (R, G, B) = (q, V, p)
If i = 2 then (R, G, B) = (p, V, t)
If i = 3 then (R, G, B) = (p, q, V)

If i = 4 then (R, G, B) = (t, p, V)
If i = 5 then (R, G, B) = (V, p, q)

CMY to RGB:

R = 1 - C

G = 1 - M

B = 1 - Y

Further descriptions of conversion equations can be found in Video Demystified, by Keith Jack, LLH Technology Publishing. At block 704 of FIG. 7, after the appropriate conversion equations have been applied to the processed second image data, the resulting image data is re-mapped, pixel by pixel, to form the final image data that corresponds to the target final color space. Referring to the Bayer pattern example, assume that the target final color space is the same as the first color space, i.e., RGB raw color space. Each pixel in the second color space, i.e., RGB composite color space, as shown in FIG. 6 is re-mapped such that the image data is converted to correspond to an RGB raw color space. In the Bayer pattern example, the re-mapping can be achieved by dropping color components.

Depending on the color space to be converted, the conversion method is described by either block 702 or block 704. For example, assume that image data that corresponds to a second color space is $YC_bC_r$ data. Assume that the objective is to convert the $YC_bC_r$ data into image data that corresponds to a final color space such as RGB composite color space. In such a case, only block 702 is performed. In another example, assume that image data that corresponds to a second color space is RGB composite data. Assume that the objective is to convert the RGB composite data into image data that corresponds to a final color space such as RGB raw color space. In this case, only block 704 is performed.

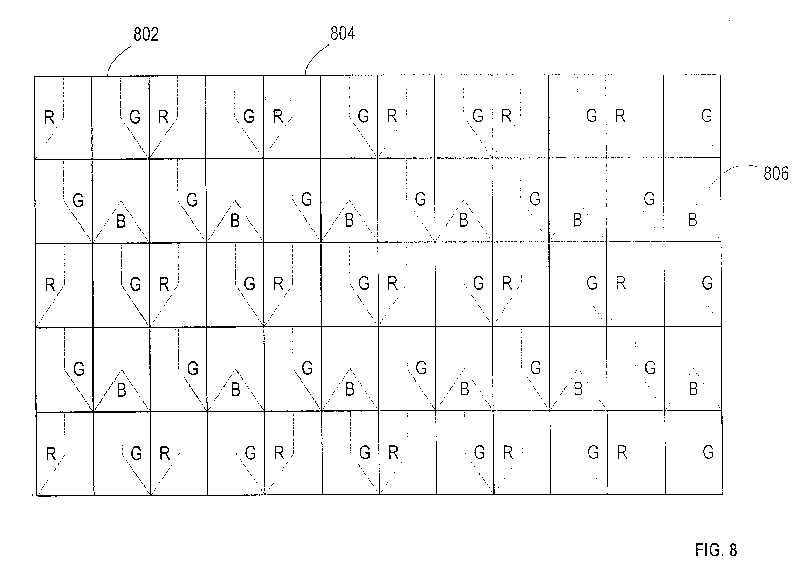

FIG. 8 is a representation of image data that has been converted from the RGB composite color space (second color space) to the RGB raw color space (final color space). With reference to FIG. 6, the multiple component pixel 602 can be re-mapped to form pixel 802 of FIG. 8. The re-mapping is performed by dropping the R and B components of pixel 602 in order to form pixel 802, which is a single component pixel in the RGB raw color space. Similarly, the multiple component pixel 604 can be re-mapped to form pixel 804 by dropping the G and B components of pixel 604. The multiple component pixel 606 can be re-mapped to form pixel 806 by dropping the G and R components of pixel 606. All the pixels in FIG. 6 can be similarly re-mapped to form corresponding pixels in FIG. 8

In the foregoing specification, embodiments of the invention have been described with reference to numerous specific details that may vary from implementation to implementation. Thus, the sole and exclusive indicator of what the invention is, and what is intended by the applicants to be the invention, is the set of claims that issue from this application, in the specific form in which such claims issue, including any subsequent correction. Any express definitions set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

**Claims**

1. A method for processing images, the method comprising:

    act A: converting a first image data from a first color space into a second image data that corresponds to a second color space;
    act B: perform image processing on the second image data in the second color space to form a processed image data; and
    act C: converting the processed image data to a third image data that corresponds to any one color space from a set of color spaces, the set of color spaces comprising:

        the first color space;
        a third color space; and
        the second color space but using a conversion method that is different from a conversion method that is used to perform act A.

2. The method of Claim 1, wherein the first color space is a single color component color space.

3. The method of Claim 1, wherein the first color space is a multiple color component color space.

4. The method of Claim 1, wherein the first color space includes any one of a second set of color spaces, the set comprising:

    RGB raw space;
    RGB composite space;
    $YC_bC_r$ space;
    YUV space;
    YIQ space;
    $YD_bD_r$ space;
    YCC space;
    HSI space;

    HLS space;
    HSV space;
    CMY space; and
    CMYK space.

5. The method of Claim 1, wherein the second color space is a single color component color space.

6. The method of Claim 1, wherein the second color space is a multiple color component color space.

7. The method of Claim 1, wherein the second color space includes any one of a third set of color spaces, the set comprising:

    RGB raw space;
    RGB composite space;
    $YC_bC_r$ space;
    YUV space;
    YIQ space;
    $YD_bD_r$ space;
    YCC space;
    HSI space;
    HLS space;
    HSV space;
    CMY space; and
    CMYK space.

8. The method of Claim 1, wherein the third color space is a single color component color space.

9. The method of Claim 1, wherein the third color space is a multiple color component color space.

10. The method of Claim 1, wherein the third color space includes any one of a fourth set of color spaces, the set comprising:

    RGB raw space;
    RGB composite space;
    $YC_bC_r$ space;
    YUV space;
    YIQ space;
    $YD_bD_r$ space;
    YCC space;
    HSI space;
    HLS space;
    HSV space;
    CMY space; and
    CMYK space.

11. The method of Claim 1, wherein act A further comprises using one or more temporary buffers to store the second image data.

12. The method of Claim 1, wherein act B further comprises using one or more temporary buffers to store the processed image data.

**13.** The method of Claim 1, wherein act B further comprises one or more of the following:

performing auto white balance;
performing auto exposure control;
performing gamma correction;
performing edge detection;
performing edge enhancement;
performing color correction;
performing cross-talk compensation;
performing hue control;
performing saturation control;
performing brightness control;
performing contrast control;
performing de-noising filters;
performing smoothing filters;
performing decimation filters;
performing interpolation filters;
performing image data compression;
performing white pixel correction;
performing dead pixel correction;
performing wounded pixel correction;
performing lens correction;
performing frequency detection;
performing indoor detection;
performing outdoor detection; and
applying special effects.

**14.** The method of Claim 1, wherein act A further comprises performing a color interpolation for converting each pixel that is associated with the first image data from a single color component to a multiple color component to form a corresponding interpolated pixel.

**15.** The method of Claim 14, further comprising applying a conversion equation to each interpolated pixel, wherein the conversion equation is selected based on the second color space.

**16.** The method of Claim 1, wherein act A further comprises applying a conversion equation to each pixel, wherein the conversion equation is selected based on the second color space.

**17.** The method of Claim 1, wherein act C further comprises re-mapping each pixel of the processed image data into the selected color space.

**18.** The method of Claim 1, wherein act C further comprises applying a conversion equation to each pixel of the processed image data, wherein the conversion equation is selected based on a selected color space from the set of color spaces.

**19.** The method of Claim 18, further comprising, after applying the conversion equation, re-mapping each pixel of the processed image data into the selected color space.

**20.** The method of Claim 19, wherein re-mapping includes dropping undesired color components.

**21.** The method of Claim 20, further comprising using filters before dropping undesired color components.

**22.** The method of Claim 20, further comprising using filters after dropping undesired color components.

**23.** The method of Claim 20, further comprising using filters before and after dropping undesired color components.

---

Convert original image data from a first color space into a second image data corresponding to a second color space.

102

---

Perform image processing on the second image data in the second color space.

104

---

Convert the second image data to image data that corresponds to a final color space, wherein the final color space can be: 1) the first color space, or 2) a third color space, or 3) a second color space where such a second color space involves a conversion method that is different from the conversion method of block 102.

106

---

FIG. 1A

| Original Image Data | Color Space Converter | Image Processing Procedures | Color Space Converter | Final Image Data |

112 114 116 118 122

110 120 130

FIG. 1B

FIG. 2

## Imaging capture system 210

| | |
|---|---|
| Imaging Capture Device 211 | Display 214 |
| DSP 212 | Interface 215 |
| Memory 213 | CPU 216 |
| | Persistent storage 217 |

## Computer system 220

| | |
|---|---|
| Display 221 | Network connection 225 |
| Interface 222 | CPU 226 |
| Persistent storage 223 | Memory 227 |
| Computer-readable media drive 224 | |

218

FIG. 2A

EP 1 580 982 A2

16

EP 1 580 982 A2

Perform color interpolation
procedure on the image
data

<u>302</u>

Apply conversion
equations to the color
interpolated image data

<u>304</u>

FIG. 3

FIG. 4

416
418

412  414

402
404
406
408
410

EP 1 580 982 A2

FIG. 5

FIG. 6

Apply conversion equation
to the processed second
image data
702

Re-map pixels to form final
image data
704

FIG. 7

21

FIG. 8

EP 1 580 982 A2